# EUROPÄISCHE PATENTSCHRIFT

(11) **EP 3 241 811 B1**
(45) Veröffentlichungstag und Bekanntmachung des Hinweises auf die Patenterteilung: **25.03.2020**
(21) Anmeldenummer: 17172441.2
(22) Anmeldetag: 03.04.2012
(51) Int. Cl.: C04B 14/16, C04B 14/18, C04B 14/20, C04B 20/00, E04F 19/02, E06B 1/70, B44C 3/04, C04B 26/14, C04B 111/28, B44C 5/04

(54) **FORMTEIL SOWIE VERFAHREN ZUR HERSTELLUNG EINES SOLCHEN FORMTEILS**
MOULDED PART AND METHOD FOR PRODUCING SUCH A MOULDED PART
ÉLÉMENT MOULÉ ET PROCÉDÉ DE FABRICATION D'UN TEL ÉLÉMENT MOULÉ

(43) Veröffentlichungstag der Anmeldung: 08.11.2017
(62) Teilanmeldung aus: 12163045.3
(73) Patentinhaber: STO SE & Co. KGaA, 79780 Stühlingen (DE)
(72) Erfinder: PFEIFFER, Christian, 89423 Gundelfingen (DE)
(74) Vertreter: Gottschalk, Matthias

(56) Entgegenhaltungen:
- EP-A2- 0 353 860
- WO-A1-2007/090445
- DE-A1- 2 410 605
- DE-U1- 20 013 200
- US-A- 4 031 684
- US-A- 4 313 997
- US-A- 5 787 667

## Beschreibung

Die Erfindung betrifft ein statisch unwirksames Formteil zur Befestigung an einer Gebäudewand oder -decke mit den Merkmalen des Oberbegriffs des Anspruchs 1. Ferner betrifft die Erfindung ein Verfahren zur Herstellung eines solchen Formteils unter Verwendung eines mineralischen Leichtfüllstoffs sowie die Verwendung geblähter Partikel eines glasreichen vulkanischen Gesteins als mineralischer Leichtfüllstoff.

### Stand der Technik

Unter der Bezeichnung "statisch unwirksames" Formteil wird vorliegend ein Bauelement verstanden, das selbsttragend ist, darüber hinaus jedoch keine statische Funktion besitzt. Das heißt, dass das Formteil beispielsweise nicht zur Ausbildung tragender Bauelemente geeignet ist. Das Formteil dient demnach vorrangig dekorativen Zwecken und kann sowohl im Innen- als auch im Außenbereich eingesetzt werden.

Für den Einsatz im Innenbereich sind insbesondere Elemente aus Gips oder Polystyrol bekannt, welche beispielsweise in Form von Profilen der Nachbildung von Stuck dienen. Für die Verwendung im Außenbereich sind derartige Elemente jedoch regelmäßig nicht geeignet, da sich Elemente aus Gips bei Einwirkung von Feuchtigkeit zersetzen und Elemente aus Polystyrol nicht ausreichend stoß- und schlagfest sind. Zwar könnte eine zusätzliche außenliegende Beschichtung, beispielsweise in Form einer Putzschicht, vorgesehen werden, um die ungünstigen Eigenschaften dieser bekannten Bauelemente zu kompensieren, dies würde jedoch einen erhöhten Zeit- und Kostenaufwand bedeuten. Es besteht demnach ein allgemeiner Bedarf nach witterungsbeständigen sowie ausreichend stoß- und schlagfesten Bauelementen für den Einsatz im Außenbereich, beispielsweise als dekorative Fassadenelemente.

Unter dem Markennamen "StoDeco" sind Architektur- bzw. Bauelemente bekannt, die einen mineralischen Leichtfüllstoff und ein Bindemittel umfassen und den vorstehend genannten Anforderungen bereits genügen. Als mineralischer Leichtfüllstoff findet hier ein Leichtgranulat auf Basis von Flugasche Verwendung. Bei der Flugasche handelt es sich um ein Nebenprodukt, das bei der Verbrennung von Kohle anfällt. In Abhängigkeit von der Zusammensetzung der Kohle kann die Qualität der Flugasche deutlichen Schwankungen unterworfen sein. Die Schwankungen sind beispielsweise an einer unterschiedlichen Färbung und/oder einer unterschiedlichen Schüttdichte der Flugasche erkennbar. Folglich muss die Flugasche einer Vorbehandlung unterzogen bzw. aufbereitet werden, was wiederum sehr kostenintensiv ist.

Weitere mineralische Leichtfüllstoffe sind auch unter der Bezeichnung Perlite bekannt. Perlite werden aus vulkanischem Glas hergestellt. Hierzu wird das vulkanische Glas auf etwa 800-1000°C erhitzt, wobei das Glas zu glühen beginnt und sein Volumen vervielfacht, indem es sich aufbläht. Die Expansionskräfte beim Blähen sind derart groß, dass die Partikel zerbersten. Demzufolge weisen herkömmliche Perlite eine unregelmäßige Form und eine offenzellige Struktur auf. Die offenzellige Struktur dieser Leichtfüllstoffe bedingt, dass herkömmliche Perlite gegebenenfalls einer Hydrophobierung unterzogen werden muss, wenn sie als mineralischer Leichtfüllstoff Verwendung finden sollen. Des Weiteren weist herkömmliche Perlite eine geringe Korndruckfestigkeit auf, was sich häufig als Nachteil erweist.

Aus DE2410605 und US4313997 sind beispielsweise Baustoffplatten bekannt, die als Leichtfüllstoff Vermiculit bzw. Perlit, und als Bindemittel Phenolharz bzw. Acrylharz verwenden.

Die Herstellung statisch unwirksamer Formteile unter Verwendung eines mineralischen Leichtfüllstoffs der vorstehend genannten Art erweist sich demnach als zeit- und kostenintensiv. Sofern auf eine aufwendige Vorbehandlung des mineralischen Leichtfüllstoffs jedoch verzichtet wird, ist der Einsatzbereich derartiger Formteile auf bestimmte Bereiche beschränkt.

Der vorliegenden Erfindung liegt daher die Aufgabe zugrunde, ein statisch unwirksames Formteil anzugeben, dass sowohl im Innenbereich als auch im Außenbereich einsetzbar und zudem kostengünstig herstellbar ist.

Zur Lösung der Aufgabe wird ein Formteil mit den Merkmalen des Anspruchs 1 sowie ein Verfahren zur Herstellung eines solchen Formteils mit den Merkmalen des Anspruchs 11 vorgeschlagen. Vorteilhafte Weiterbildungen der Erfindung sind in den jeweiligen Unteransprüchen angegeben.

### Offenbarung der Erfindung

Das vorgeschlagene statisch unwirksame Formteil zur Befestigung an einer Gebäudewand oder -decke enthält zumindest einen mineralischen Leichtfüllstoff und ein Bindemittel. Erfindungsgemäß ist vorgesehen, dass der mineralische Leichtfüllstoff geblähte Partikel mit einer geschlossenzelligen Struktur und/oder einer geschlossenen, vorzugsweise glas- oder sinterartigen Oberfläche umfasst. Dank der geschlossenzelligen Struktur und/oder der geschlossenen Oberfläche nehmen die geblähten Partikel kein oder kaum Wasser auf, so dass eine Vorbehandlung der Partikel, insbesondere in Form einer Hydrophobierung, entfallen kann. Das hieraus hergestellte Formteil nimmt aufgrund der nicht-wasseraufhehmenden Eigenschaften der geblähten Partikel keine oder kaum Feuchtigkeit auf und ist somit witterungsbeständig, d.h. für den Einsatz im Außenbereich geeignet. Ferner ist das Formteil kostengünstiger herzustellen, da zumindest der Arbeitsschritt der Hydrophobierung entfallen kann.

Erfindungsgemäß beträgt der mineralische Leichtfüllstoffanteil 75 bis 95 Gew.-%, vorzugsweise 80 bis 90 Gew.-% bezogen auf das Gesamtgewicht der Ausgangsstoffe. Der relativ hohe Anteil wenigstens eines mineralischen Leichtfüllstoffs wirkt sich positiv auf die mechanischen Eigenschaften, insbesondere im Hinblick auf die Stoß- und Schlagfestigkeit des Formteils aus. Weiterhin erfindungsgemäß umfasst der mineralische Leichtfüllstoffanteil geblähte Partikel wenigstens eines glasreichen vulkanischen Gesteins. Dies setzt voraus, dass ein blähbares glasreiches vulkanisches Gestein, d.h. ein glasreiches vulkanisches Gestein, das gebundenes Wasser (z.B. Kristallwasser) enthält, als Ausgangsstoff bzw. Rohstoff verwendet wird. Denn das enthaltene gebundene Wasser dehnt sich beim Erhitzen des Ausgangsstoffes bzw. Rohstoffes aus, verdunstet und hinterlässt die gewünschten Hohlräume. Dabei ist auf eine gleichmäßige Wärmeverteilung zu achten, um ein Zerbersten der Partikel zu verhindern bzw. geblähte Partikel mit einer geschlossenzelligen Struktur und/oder einer geschlossenen Oberfläche zu erhalten. Auf diese Weise erhaltene geblähte Partikel zeichnen sich zudem durch eine weitgehend regelmäßige Kugelform aus. Als Ausgangsstoffe bzw. Rohstoffe eignen sich insbesondere glasreiche vulkanische Gesteine, wie beispielsweise Obsidian, Vermiculit und/oder Bims.

Der Bindemittelanteil beträgt vorzugsweise 5 bis 25 Gew.-%, weiterhin vorzugsweise 10 bis 20 Gew.-% bezogen auf das Gesamtgewicht der Ausgangsstoffe. Aufgrund des relativ geringen Bindemittelanteils weist das Formteil die Anmutung eines natürlichen Werkstoffs auf. Zugleich ist ein stabiler Verbund der Partikel untereinander gewährleistet. Ferner bevorzugt umfasst der Bindemittelanteil wenigstens ein organisches Bindemittel, insbesondere Epoxidharz. Organische Bindemittel weisen gegenüber mineralischen Bindemitteln eine höhere Bindekraft auf, so dass der Bindemittelanteil gering gehalten werden kann. Als besonders geeignet hat sich der Einsatz von Epoxidharz als Bindemittel erwiesen.

Bevorzugt beträgt die Rohdichte des Formteils 450 bis 750 kg/m³, vorzugsweise 500 bis 700 kg/m³ und weiterhin vorzugsweise 550 bis 650 kg/m³. Aufgrund der Rohdichte weist das Formteil eine ausreichende Stoß- und Schlagfestigkeit für die Anwendung als Fassadenelement auf.

Ferner bevorzugt beträgt der Elastizitätsmodul (E-Modul) des Formteils 1450 bis 2000 N/mm², vorzugsweise 1600 bis 1800 N/mm². Gegenüber den eingangs genannten Formteilen, welche einen mineralischen Leichtfüllstoff auf Basis von Flugasche enthalten und einen E-Modul zwischen 2000 und 2200 N/mm² besitzen, weist ein erfindungsgemäßes Formteil eine höhere Elastizität auf, was sich positiv auf die Kantenstabilität des Formteils auswirkt.

Des Weiteren bevorzugt beträgt die Wärmeleitfähigkeit λ des Formteils < 200 mW/(m^{∗}K), vorzugsweise < 175 mW/(m^{∗}K), weiterhin vorzugsweise < 150 mW/(m^{∗}K). Es weist demnach wärmedämmende Eigenschaften auf, welche bei Einsatz als Fassadenelement der Ausbildung einer unerwünschten Wärmebrücke entgegen wirken.

Vorzugsweise ist das Formteil nicht brennbar und weiterhin vorzugsweise der Brandklasse A2 - s1, d0 nach EN 13501-1 zuzuordnen. Dadurch erweitert sich der Einsatzbereich des Formteils auf Bereiche, bei denen es Brandschutzanforderungen zu erfüllen gilt.

Gemäß einer ersten bevorzugten Ausführungsform der Erfindung ist das Formteil profilförmig und damit zur Ausbildung von selbsttragenden Gesimsen, Fensterbänken, Fensterbögen, insbesondere Rund-, Korb- und Spitzbögen, und dergleichen geeignet. Ein solches Formteil ist insbesondere als dekoratives Fassadenelement einsetzbar, beispielsweise zur Gliederung und/oder Profilierung einer Fassade. Da es statisch unwirksam ist, kann es keine tragende Funktion übernehmen.

Gemäß einer weiteren bevorzugten Ausführungsform der Erfindung ist das Formteil platten- oder blockförmig und damit zur Ausbildung von selbsttragenden Kopfsteinen, Kapitellen, Sohlbankstützen und dergleichen geeignet. Auch ein solches Formteil ist demnach insbesondere als dekoratives Fassadenelement einsetzbar, beispielsweise zur Gliederung und/oder Profilierung einer Fassade. Da es statisch unwirksam ist, kann es keine tragende Funktion übernehmen.

Alternativ zur Ausbildung als Vollkörper kann das Formteil ferner als Hohlkörper ausgebildet sein. Dies gilt insbesondere für profil- oder blockförmige Formteile. Die Herstellung eines als Hohlkörper ausgebildeten Formteils erfordert weniger Material und ist somit kostengünstiger. Zudem weist ein als Hohlkörper ausgebildetes Formteil den Vorteil auf, dass es gegenüber einem massiv ausgebildeten Formteil ein geringeres Gewicht besitzt. Dadurch wird die Handhabbarkeit des Formteils, beispielsweise auf der Baustelle, verbessert.

Zur Lösung der eingangs genannten Aufgabe wird des Weiteren ein Verfahren zur Herstellung eines erfindungsgemäßen Formteils vorgeschlagen, bei welchem zumindest ein mineralischer Leichtfüllstoff und ein organisches Bindemittel vermischt werden und die Mischung in einer Form unter Zugabe von Druck und/oder Wärme zu einem Formteil verpresst wird. Das erfindungsgemäße Verfahren zeichnet sich dadurch aus, dass der mineralische Leichtfüllstoffanteil 75 bis 95 Gew.-%, vorzugsweise 80 bis 90 Gew.-% bezogen auf das Gesamtgewicht der Ausgangsstoffe beträgt und dass geblähte Partikel mit einer geschlossenzelligen Struktur und/oder einer geschlossenen, vorzugsweise glas- oder sinterartigen Oberfläche als mineralischer Leichtfüllstoff verwendet werden. Als Rohstoff für die geblähten Partikel wird ein glasreiches vulkanisches Gestein, das gebundenes Wasser enthält, verwendet. Das enthaltene gebundene Wasser dehnt sich beim Erhitzen des Ausgangsstoffes bzw. Rohstoffes aus, verdunstet und hinterlässt die gewünschten Hohlräume. Dabei ist auf eine gleichmäßige Wärmeverteilung zu achten, um ein Zerbersten der Partikel zu verhindern bzw. geblähte Partikel mit einer geschlossenzelligen Struktur und/oder einer geschlossenen Oberfläche zu erhalten. Auf diese Weise erhaltene geblähte Partikel zeichnen sich zudem durch eine weitgehend regelmäßige Kugelform aus. Als Ausgangsstoffe bzw. Rohstoffe eignen sich insbesondere glasreiche vulkanische Gesteine, wie beispielsweise Obsidian, Vermiculit und/oder Bims.

Aufgrund der geschlossenzelligen Struktur und/oder der geschlossenen Oberfläche nehmen die geblähten Partikel kein oder kaum Wasser auf. Eine Vorbehandlung zur Hydrophobierung kann somit entfallen. Dadurch wird das Verfahren einfacher und kostengünstiger. Zudem erstrecken sich die Eigenschaften der geblähten Partikel auf das hieraus hergestellte Formteil. Das heißt, dass das nach dem erfindungsgemäßen Verfahren hergestellte Formteil keine oder kaum Feuchtigkeit aufnimmt und somit witterungsbeständig bzw. für den Einsatz im Außenbereich geeignet ist.

Bevorzugt werden 5 bis 25 Gew.-%, vorzugsweise 10 bis 20 Gew.-% wenigstens eines Bindemittels jeweils bezogen auf das Gesamtgewicht der Ausgangsstoffe verwendet. Der relativ hohe Anteil wenigstens eines mineralischen Leichtfüllstoffs führt zu einem Formteil, das als nicht brennbar zu klassifizieren, insbesondere der Brandklassifizierung A2 - s1, d0 nach EN 13501-1 zuzuordnen ist. Ferner weist ein solches Formteil gute mechanische Eigenschaften auf und ist insbesondere schlag- und stoßfest. Der Bindemittelanteil ist zudem ausreichend, um einen stabilen Verbund der geblähten Partikel untereinander zu gewährleisten.

Weiterhin bevorzugt wird wenigstens ein organisches Bindemittel, insbesondere Epoxidharz, als Bindemittel verwendet. Organische Bindemittel weisen gegenüber mineralischen Bindemitteln eine höhere Bindekraft auf, so dass selbst bei einem relativ geringen Bindemittelanteil ein stabiler Verbund der Partikel untereinander erreicht werden kann.

Ferner wird vorgeschlagen, dass das Formteil nach der Entnahme aus der Form zugeschnitten und/oder einem weiteren Formgebungsprozess unterzogen wird. Beispielsweise können profilförmige Formteile auf Länge geschnitten oder plattenförmige Formteile aus Blöcken herausgeschnitten werden. In einem zusätzlichen Formgebungsprozess kann das Formteil zudem profiliert oder strukturiert werden. Beispielsweise kann das Formteil mit einem bestimmten Dekor versehen werden. Vorzugsweise erfolgt die zusätzliche Formgebung mittels Fräsen.

Darüber hinaus wird die Verwendung geblähter Partikel mit einer geschlossenzelligen Struktur und/oder einer geschlossenen, vorzugsweise glas- oder sinterartigen Oberfläche wenigstens eines glasreichen vulkanischen Gesteins als mineralischer Leichtfüllstoff in einem statisch unwirksamen Formteil zur Befestigung an einer Gebäudewand oder -decke vorgeschlagen. Der mineralische Leichtfüllstoffanteil beträgt 75 bis 95 Gew.-%, vorzugsweise 80 bis 90 Gew.-% bezogen auf das Gesamtgewicht der Ausgangsstoffe. Als Rohstoff für die geblähten Partikel wird ein glasreiches vulkanisches Gestein, das gebundenes Wasser enthält, verwendet. Das enthaltene gebundene Wasser dehnt sich beim Erhitzen des Ausgangsstoffes bzw. Rohstoffes aus, verdunstet und hinterlässt die gewünschten Hohlräume. Dabei ist auf eine gleichmäßige Wärmeverteilung zu achten, um ein Zerbersten der Partikel zu verhindern bzw. geblähte Partikel mit einer geschlossenzelligen Struktur und/oder einer geschlossenen Oberfläche zu erhalten. Auf diese Weise erhaltene geblähte Partikel zeichnen sich zudem durch eine weitgehend regelmäßige Kugelform aus. Als Ausgangsstoffe bzw. Rohstoffe eignen sich insbesondere glasreiche vulkanische Gesteine, wie beispielsweise Obsidian, Vermiculit und/oder Bims.

Aufgrund der geschlossenzelligen Struktur und/oder der geschlossenen Oberfläche nehmen derartige geblähte Partikel kein oder kaum Wasser auf und bedürfen demnach keiner zusätzlichen Hydrophobierung, um die Witterungsbeständigkeit eines hieraus hergestellten Formteils zu gewährleisten. Das Formteil ist demnach vielseitig einsetzbar, insbesondere für den Einsatz im Außenbereich geeignet, und - im Vergleich zu anderen auf dem Markt erhältlichen statisch unwirksamen Formteilen zur Befestigung an einer Gebäudewand oder -decke - zudem kostengünstiger herzustellen.

## Patentansprüche

1. Statisch unwirksames Formteil zur Befestigung an einer Gebäudewand oder - decke, wobei das Formteil zumindest einen mineralischen Leichtfüllstoff und ein Bindemittel enthält,
**dadurch gekennzeichnet, dass** der mineralische Leichtfüllstoff geblähte Partikel mit einer geschlossenzelligen Struktur und/oder einer geschlossenen, vorzugsweise glas- oder sinterartigen Oberfläche umfasst,
dass die Partikel sich durch eine weitgehend regelmäßige Kugelform auszeichnen,
dass für den Leichtfüllstoff ein glasreiches vulkanisches Gestein, das gebundenes Wasser enthält, als Rohstoff verwendet wird, welcher erhitzt wird, so dass das enthaltene gebundene Wasser sich beim Erhitzen des Rohstoffes ausdehnt, verdunstet und die gewünschten Hohlräume hinterlässt, wobei mittels einer gleichmässigen Wärmeverteilung ein Zerbersten der Partikel verhindert wird,
und dass der mineralische Leichtfüllstoffanteil 75 bis 95 Gew.-%, vorzugsweise 80 bis 90 Gew.-% bezogen auf das Gesamtgewicht der Ausgangsstoffe beträgt.

2. Formteil nach Anspruch 1,
**dadurch gekennzeichnet, dass** das glasreiche vulkanische Gestein Obsidian, Vermiculit und/oder Bims ist.

3. Formteil nach Anspruch 1 oder 2,
**dadurch gekennzeichnet, dass** der Bindemittelanteil 5 bis 25 Gew.-%, vorzugsweise 10 bis 20 Gew.-% bezogen auf das Gesamtgewicht der Ausgangsstoffe beträgt und wenigstens ein organisches Bindemittel, insbesondere Epoxidharz, umfasst.

4. Formteil nach einem der vorhergehenden Ansprüche,
**dadurch gekennzeichnet, dass** die Rohdichte des Formteils 450 bis 750 kg/m³, vorzugsweise 500 bis 700 kg/m³, weiterhin vorzugsweise 550 bis 650 kg/m³ beträgt.

5. Formteil nach einem der vorhergehenden Ansprüche,
**dadurch gekennzeichnet, dass** der Elastizitätsmodul des Formteils 1450 bis 2000 N/mm², vorzugsweise 1600 bis 1800 N/mm² beträgt.

6. Formteil nach einem der vorhergehenden Ansprüche,
**dadurch gekennzeichnet, dass** die Wärmeleitfähigkeit λ des Formteils < 200 mW/(m^{∗}K), vorzugsweise < 175 mW/(mv^{∗}K), weiterhin vorzugsweise < 150 mW/(m^{∗}K) beträgt.

7. Formteil nach einem der vorhergehenden Ansprüche,
**dadurch gekennzeichnet, dass** das Formteil nicht brennbar ist, wobei das Formteil vorzugsweise der Brandklasse A2 - s1, d0 nach EN 13501-1 zuzuordnen ist.

8. Formteil nach einem der vorhergehenden Ansprüche,
**dadurch gekennzeichnet, dass** das Formteil profilförmig ist und zur Ausbildung von selbsttragenden Gesimsen, Fensterbänken, Fensterbögen, insbesondere Rund-, Korb- und Spitzbögen, und dergleichen geeignet ist.

9. Formteil nach einem der vorhergehenden Ansprüche,
**dadurch gekennzeichnet, dass** das Formteil platten- oder blockförmig ist und zur Ausbildung von selbsttragenden Kopfsteinen, Kapitellen, Sohlbankstützen und dergleichen geeignet ist.

10. Formteil nach einem der vorhergehenden Ansprüche,
**dadurch gekennzeichnet, dass** das Formteil als Hohlkörper ausgebildet ist.

11. Verfahren zur Herstellung eines Formteils nach einem der vorhergehenden Ansprüche, bei welchem zumindest ein mineralischer Leichtfüllstoff und ein organisches Bindemittel vermischt werden und die Mischung in einer Form unter Zugabe von Druck und/oder Wärme zu einem Formteil verpresst wird, **dadurch gekennzeichnet, dass** geblähte Partikel mit einer weitgehend regelmäßigen Kugelform sowie einer geschlossenzelligen Struktur und/oder einer geschlossenen, vorzugsweise glas- oder sinterartigen Oberfläche als mineralischer Leichtfüllstoff verwendet werden, wobei zur Erzeugung der Partikel ein glasreiches vulkanisches Gestein, das gebundenes Wasser enthält, als Rohstoff verwendet wird, welcher erhitzt wird, so dass das enthaltene gebundene Wasser sich beim Erhitzen des Rohstoffes ausdehnt, verdunstet und die gewünschten Hohlräume hinterlässt, wobei mittels einer gleichmässigen Wärmeverteilung ein Zerbersten der Partikel verhindert wird, wobei 75 bis 95 Gew.-%, vorzugsweise 80 bis 90 Gew.-% wenigstens eines mineralischen Leichtfüllstoffs und 5 bis 25 Gew.-%, vorzugsweise 10 bis 20 Gew.-% wenigstens eines Bindemittels jeweils bezogen auf das Gesamtgewicht der Ausgangsstoffe verwendet werden.

12. Verfahren nach Anspruch 11,
**dadurch gekennzeichnet, dass** geblähte Partikel vonObsidian, Vermiculit und/oder Bims, als mineralischer Leichtfüllstoff und/oder wenigstens ein organisches Bindemittel, insbesondere Epoxidharz, als Bindemittel verwendet werden.

13. Verfahren nach einem der Ansprüche 11 oder 12,
**dadurch gekennzeichnet, dass** das Formteil nach der Entnahme aus der Form zugeschnitten und/oder einem weiteren Formgebungsprozess, vorzugsweise mittels Fräsen, unterzogen wird.

## Claims

1. Structurally ineffective molded part for fastening to a building wall or ceiling, wherein the molded part contains at least one lightweight mineral filler and one binding agent,
**characterized in that** the lightweight mineral filler comprises foamed particles with a closed-cell structure and/or a closed, preferably glass-like or sinter-like surface,
**in that** the particles are **characterized by** a largely regular spherical shape, in that a glass-rich volcanic rock containing bound water is used as a raw material, which is heated in such a way that the bound water contained expands upon heating of the raw material, evaporates and leaves the desired cavities, while ensuring a uniform heat distribution in order to prevent the particles from bursting,
and in that the lightweight mineral filler constitutes 75 to 95% by weight, preferably 80 to 90% by weight, of the total weight of the starting materials.

2. Molded part according to claim 1,
**characterized in that** the glass-rich volcanic rock is obsidian, vermiculite and/or pumice.

3. Molded part according to claim 1 or 2,
**characterized in that** the binding agent constitutes 5 to 25% by weight, preferably 10 to 20% by weight, of the total weight of the starting materials and comprises at least one organic binding agent, particularly epoxy resin.

4. Molded part according to any one of the preceding claims,
**characterized in that** the molded part has a bulk density of 450 to 750 kg/m³, preferably 500 to 700 kg/m³, more preferably 550 to 650 kg/m³.

5. Molded part according to any one of the preceding claims,
**characterized in that** the molded part has a modulus of elasticity of 1450 to 2000 N/mm², preferably 1600 to 1800 N/mm².

6. Molded part according to any one of the preceding claims,
**characterized in that** the thermal conductivity λ of the molded part is <200 mW/(mv^{∗}K), preferably <175 mW/(mv^{∗}K), more preferably <150 mW/(m^{∗}K).

7. Molded part according to any one of the preceding claims,
**characterized in that** the molded part is not combustible, wherein the molded part can be classified preferably in fire class A2 - s1, d0 according to EN 13501-1.

8. Molded part according to any one of the preceding claims,
**characterized in that** the molded part is profiled, and is suitable for constructing self-supporting cornices, windowsills, window arches, particularly round arches, basket arches and ogives and the like.

9. Molded part according to any one of the preceding claims,
**characterized in that** the molded part is in the form of a panel or block, and is suitable for constructing self-supporting headers, capitals, windowledge supports and the like.

10. Molded part according to any one of the preceding claims,
**characterized in that** the molded part is constructed as a hollow body.

11. Method for manufacturing a molded part according to any one of the preceding claims, in which at least one lightweight mineral filler and one binding agent are mixed, and the mixture is compressed to form a molded part in a mold by applying pressure and/or heat, **characterized in that** foamed particles with a largely regular spherical shape and a closed-cell structure and/or a closed, preferably glass-like or sinter-like surface are used as the lightweight mineral filler, wherein a glass-rich volcanic rock containing bound water is used as a raw material to produce the particles, which is heated in such a way that the bound water contained expands upon heating of the raw material, evaporates and leaves the desired cavities, while ensuring a uniform heat distribution in order to prevent the particles from bursting, wherein 75 to 95% by weight, preferably 80 to 90% by weight, of at least one lightweight mineral filler and 5 to 25% by weight, preferably 10 to 20% by weight, of at least one binding agent are used, each relative to the total weight of the starting materials.

12. Method according to claim 11,
**characterized in that** foamed particles of obsidian, vermiculite and/or pumice, are used as the lightweight mineral filler and/or at least one organic binding agent, particularly epoxy resin, as the binding agent.

13. Method according to any one of claims 11 or 12,
**characterized in that** after demolding the molded part is cut to size and/or is subjected to a further shaping process, preferably by milling.

## Revendications

1. Pièce moulée sans fonction statique, destinée à être fixée sur le mur ou le plafond d'un bâtiment, la pièce moulée contenant au moins une matière de charge minérale légère et un liant
**caractérisée en ce que** la substance légère de remplissage, de caractère minéral, comprend des particules dilatées avec une structure à cellules fermées et/ou une surface fermée, de préférence de type verre ou frittée, que les particules se caractérisent par une forme sphérique largement régulière,
qu'une roche volcanique riche en verre contenant de l'eau liée est utilisée comme matière première pour la substance légère de remplissage qui est chauffée de sorte que l'eau liée contenue se dilate lors du réchauffement de la matière première, s'évapore et quitte les cavités souhaitées, une répartition uniforme de la chaleur empêchant les particules de finir par éclater,
et que la part dans la substance légère de remplissage, de caractère minéral, est comprise entre 75 et 95 % en poids, de préférence entre 80 et 90 %, par rapport au poids total des matières de base.

2. Pièce moulée selon la revendication 1,
**caractérisée en ce que** la roche volcanique riche en verre est de l'obsidienne, de la vermiculite et/ou de la pierre ponce.

3. Pièce moulée selon la revendication 1 ou 2,
**caractérisée en ce que** la teneur en liant est comprise entre 5 et 25 % en poids, de préférence entre 10 et 20 % en poids, par rapport au poids total des matières premières et comporte au moins un liant organique, en particulier de la résine époxy.

4. Pièce moulée selon l'une des revendications précédentes,
**caractérisée en ce que** la densité brute de la pièce moulée est comprise entre 450 et 750 kg/m³, de préférence entre 500 et 700 kg/m³, par ailleurs de préférence entre 550 et 650 kg/m³.

5. Pièce moulée selon l'une des revendications précédentes,
**caractérisée en ce que** le module élastique de la pièce moulée est compris entre 1450 à 2000 N/mm², de préférence entre 1600 et 1800 N/mm².

6. Pièce moulée selon l'une des revendications précédentes,
**caractérisée en ce que** la conductivité thermique λ de la pièce moulée s'élève à <200 mW/(mv^{∗}K), de préférence à <175 mW/(mv^{∗}K), par ailleurs de préférence à <150 mW/(m^{∗}K).

7. Pièce moulée selon l'une des revendications précédentes,
**caractérisée en ce que** la pièce moulée est non inflammable, la pièce moulée étant attribuable de préférence à la classe d'incendie A2 - s1, d0 selon EN 13501-1.

8. Pièce moulée selon l'une des revendications précédentes,
**caractérisée en ce que** la pièce moulée a la forme d'un profilé et convenant pour former de corniches autoportantes, de rebords de fenêtre, d'arcs de fenêtre, en particulier d'arcs ronds, de panier et ogivaux, et similaires.

9. Pièce moulée selon l'une des revendications précédentes,
**caractérisée en ce que** la partie moulée est en forme de plaque ou de bloc et convenant pour former des pavés autoportants, des chapiteaux, des rebords de fenêtre installés à l'extérieur du bâtiment, et similaires.

10. Pièce moulée selon l'une des revendications précédentes,
**caractérisée en ce que** la pièce moulée est façonnée en forme de corps creux.

11. Procédé de fabrication d'une pièce moulée selon l'une des revendications précédentes, au cours duquel au moins une substance légère de remplissage, de caractère minéral, et un liant organique sont mélangés et le mélange obtenu est pressé en une pièce moulée dans un moule par ajout de pression et/ou de chaleur, **caractérisé en ce que** des particules dilatées ayant une forme sphérique largement régulière et une structure à cellules fermées et/ou une surface fermée, de préférence de type verre ou frittée sont utilisées comme substance légère de remplissage, de caractère minéral, en utilisant une roche volcanique riche en verre comme matière première pour produire lesdites particules, contenant de l'eau liée qui est chauffée de sorte que celle-ci se dilate, s'évapore et quitte les cavités souhaitées, une répartition uniforme de la chaleur empêchant les particules de finir par éclater, en employant 75 à 95 % en poids, de préférence 80 à 90 % de poids d'au moins une substance légère de remplissage, de caractère minéral, et 5 à 25 % en poids, de préférence 10 à 20 % en poids d'au moins un liant, par rapport au poids total des matières de base.

12. Procédé selon la revendication 11,
**caractérisé en ce que** des particules dilatées d'obsidienne, de vermiculite et/ou de pierre ponce, sont utilisées comme substance légère de remplissage, de caractère minéral, et/ou au moins un liant organique, en particulier de la résine époxy, est utilisé comme liant.

13. Procédé selon l'une des revendications 11 ou 12,
**caractérisé en ce que** la pièce moulée est découpée après avoir été retirée du moule et/ou soumise à un autre procédé de mise en forme, de préférence par fraisage.
